Europäisches Patentamt

European Patent Office

Office européen des brevets

(11) Numéro de publication: **0 085 620**
**B1**

(12) **FASCICULE DE BREVET EUROPEEN**

(45) Date de publication du fascicule du brevet: 30.04.86

(51) Int. Cl.⁴: **B 65 G 5/00, F 17 C 13/06**

(21) Numéro de dépôt: 83400196.8

(22) Date de dépôt: 28.01.83

(54) **Procédé et dispositif d'obturation d'un puits débouchant dans le plafond d'une cavité souterraine de stockage à basse température.**

(30) Priorité: 29.01.82 FR 8201447

(43) Date de publication de la demande:
10.08.83 Bulletin 83/32

(45) Mention de la délivrance du brevet:
30.04.86 Bulletin 86/18

(84) Etats contractants désignés:
BE DE GB IT NL SE

(56) Documents cités:
FR-A-1 021 423
FR-A-2 372 753

(73) Titulaire: Société Française de Stockage
Géologique "GEOSTOCK"
Tour Aurore - Cédex No 5
F-92080 Paris La Défense2 (FR)
(73) Titulaire: Société DISTRIGAZ
31, avenue des Arts
B-1040 Bruxelles (BE)

(72) Inventeur: Luyten, Walter
Schijnparklaan 24
B-2120 Schoten (BE)
Inventeur: Boulanger, Alain
7, rue de l'Alboni
F-75016 Paris (FR)

(74) Mandataire: Pinguet, André
CAPRI 28 bis, avenue Mozart
F-75016 Paris (FR)

EP 0 085 620 B1

## Description

La présente invention a trait aux installations souterraines de stockage de produits à basse température, notamment des gaz combustibles liquéfiés, stockés à la pression atmosphérique. L'invention concerne un procédé et un dispositif pour obturer un puits débouchant dans le plafond d'une cavité souterraine de stockage à basse température. Par basse température, on entend une température inférieure à la température de congélation de l'eau souterraine imprégnant le terrain (les roches) de sorte que, quand le stockage est en service, les parois de la cavité sont imprégnées et/ou revêtues de glace, ce qui rend la cavité étanche. Les températures de service peuvent être comprises entre —10 et —196°C.

On connaît déjà par le FR—A—2 372 752 du 2 décembre 1976, un procédé pour réaliser une galerie souterraine de stockage à basse température (cryogénique). Selon ce procédé, on observe les parois de la cavité et le massif environnant pendant les périodes de la mise en froid qui s'étendent entre le moment où les parois de la cavité sont rendues étanches à l'eau par le gel de celle-ci et le moment de la fin de la mise en froid, de façon à intervenir si nécessaire pendant cette période, en fonction de ces observations, en modifiant le progamme initial de mise en froid et/ou en réparant les désordres qui sont apparus.

Le FR—A—1 021 423 décrit un dispositif d'obturation d'un puit. Il concerne une roche de résistance suffisante, sur laquelle on peut accrocher un bouchon en béton, et l'exploitation est prévue à température ambiante. Ce brevet vise la saturation de la roche en vue de l'étanchéïté de la cavité.

L'invention concerne plus particulièrement l'installation de cavités dans des massifs dont la résistance naturelle n'est pas suffisante et pour lesquels un soutènement est nécessaire, au moins pendant les travaux et jusqu'à la mise en froid du produit. Le dispositif d'obturation ne peut être porté par la roche, au moins tant que l'eau qui imprègne celle-ci n'est pas gelée.

Pour creuser la cavité, il est parfois nécessaire de réaliser un puits de service permettant le passage du personnel, du matériel et l'évacuation des déblais. Une fois la cavité terminée, le puits doit être comblé, après y avoir disposé les canalisations permettant la gestion du stockage. Ce comblement est nécessaire pour des raisons d'équilibre thermique et mécanique du sol, qui gèle autour de la cavité en raison de la basse température qui y règne (température d'ébullition du gaz stocké à la pression atmosphérique).

La cavité doit être obturée avant le comblement du puits. Il s'agit d'une opération délicate, car les matériaux mis en place à température ambiante sont ensuite refroidis à basse température pour mettre le stockage en service. Le FR—A—2 372 753 du 2 décembre 1976 décrit un dispositif d'obturation pour stockage souterrain à basse température. Dans ce dispositif, établi prés du fond de puits qui a servi à creuser la cavité souterraine, qui comporte une surface d'appui sur la roche environnante, des passages pour les canalisations et des moyens d'étanchéïté, la surface d'appui sur la roche a la forme d'un tronc de cône ouvert vers le haut et d'angle au sommet compris entre 60 et 140°, et les moyens d'étanchéïté sont disposés au-dessus et indépendamment de la surface d'appui. Après la mise en place de ce dispositif, le puits est rempli de béton. Une telle obturation doit être effectuée à une certaine hauteur au-dessus de la cavité afin d'avoir pour l'obturation une assise assez solide, Cependant, il est préférable, pour avoir une bonne disposition des isothermes autour de la cavité, d'avoir une obturation aussi proche que possible de la cavité, avantageusement au niveau de sa paroi. La présente invention a pour but un dispositif d'obturation prévu pour fermer la cavité dans l'alignement de sa paroi, et a également pour objet un procédé de mise en place d'un tel dispositif d'obturation.

L'invention s'applique plus particulièrement, mais non exclusivement, au cas où la paroi de la cavité est supportée, avant l'opération de mise en froid, par des soutènements à action temporaire, tels que par exemple des voussoirs.

Conformément à la présente invention, un dispositif d'obturation pour ouverture du puits débouchant dans le plafond d'une cavité souterraine creusée dans un massif non résistant pour lequel un soutènement est nécessaire, ladite cavité étant prévue pour un stockage à basse température, est caractérisé en ce qu'il comporte une pièce en forme de clef de voûte, avec au moins deux faces généralement planes inclinées sur la verticale pour se rejoindre vers le bas, cette pièce comportant au moins un orifice de passage de canalisation au voisinage de son sommet.

D'autres caractéristiques de l'invention apparaîtront au cours de la description qui va suivre, donnée à titre d'exemple non limitatif en regard des dessins ci-joints, et qui fera bien comprendre comment l'invention peut être réalisée.

Les dessins montrent:

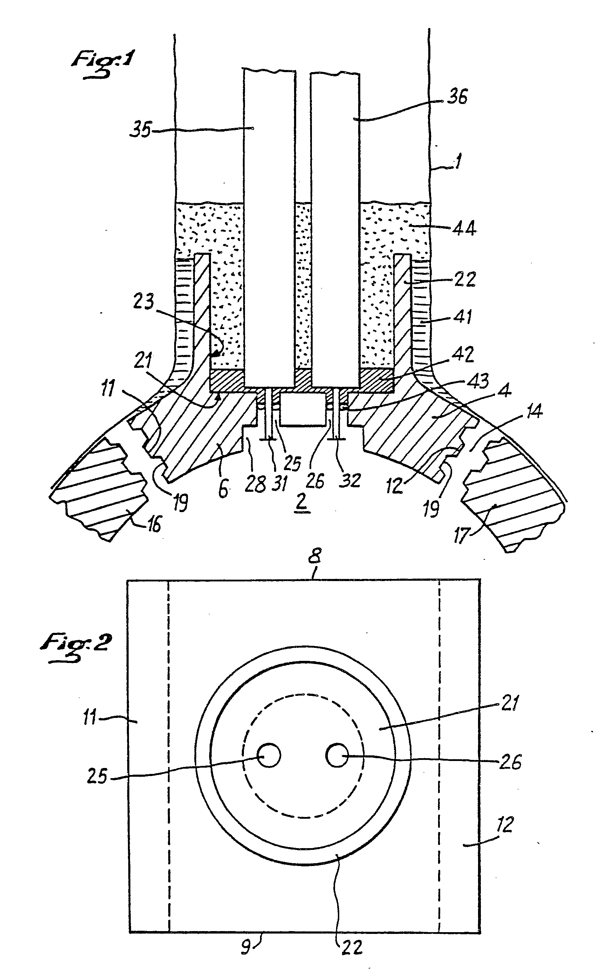

— figure 1, une vue en coupe par un plan vertical d'une obturation de cavité réalisée conformément à la présente invention, et
— figure 2, une vue en plan d'un pièce de forme constituant une partie essentielle du dispositif d'obturation selon l'invention.

L'obturation selon l'invention est prévue pour obturer l'ouverture d'un puits 1 débouchant dans le plafond d'une cavité 2. On utilise une pièce 4 en forme de clef de voûte. Cette pièce peut être en béton d'époxy (résine chargée de silice, le cas échéant avec des fibres de verre ou analogue). Elle comporte une base 6, pouvant être voûtée, délimitée par deux faces verticales parallèles 8, 9 et deux faces inclinées 11, 12. Les faces inclinées sont prévues pour prendre appui directement ou par l'intermédiaire d'un joint 14, par exemple en béton d'époxy, ou d'une cale appropriée contre des surfaces d'inclinaison correspondantes. Ces surfaces peuvent être formées dans la roche délimitant la cavité si cette roche est assez dure ou peuvent être les faces de voussoirs 16, 17 supportant la voûte de la cavité avant sa mise en froid. En général, après descente de la température à une valeur assez basse pour le stockage de gaz liquéfié, la roche ou le minéral délimitant la cavité est gelée, et est alors assez rigide pour ne plus être étayée, et les voussoirs n'ont plus d'utilité. Les faces 11 et 12 peuvent être garnies de reliefs 19, facilitant l'accrochage du béton. Ces reliefs ne doivent toutefois pas être trop accentués pour ne pas gêner le pénétration du béton jusqu'au fond des reliefs. Ces reliefs peuvent ou non correspondre aux reliefs des faces en regard des voussoirs. La clef de voûte occupe ainsi la place d'un certain nombre de voussoirs dans les deux directions; ce nombre est fonction des dimensions des voussoirs.

La partie centrale du dessus de la clef de voûte forme de préférence une surface plane circulaire 21. Elle est entourée d'une jupe 22 verticale formant une margelle s'étendant sur une certaine hauteur, dans un but qui sera expliqué ci-après. La margelle délimite un puits 23 dont le fond plat 21 comporte un certain nombre de perforations 25, 26 selon le nombre de canalisations nécessaires pour le fonctionnement du stockage. Il peut aussi y avoir un trou d'homme obturable après la pose. Avantageusement, ces perforations débouchent à la face inférieure dans un renfoncement 28. Des canalisations 31, 32 sont engagées dans les perforations 25, 26 et débouchent dans le renfoncement 28 qui offre ainsi un volume facilitant le raccordement des canalisations à des tubulures internes sans écarter ces dernières du plafond de la cavité. Au-dessus du fond plat, les canalisations 31, 32 sont garnies d'isolant thermique 35, 36 et présentent ainsi des diamètres supérieurs. Les canalisations 31, 32 peuvent comporter dans le plan du fond plat 21 des disques rigides limitant l'isolant, ces diques étant fixés aux canalisations. Cette disposition détermine ainsi un point fixe des canalisations 31, 32, dont la dilatation thermique s'exercera vers le haut, à travers l'isolant 35, 36 à partir du fond plat 21.

L'obturation est effectuée de la façon suivante. La clef de voûte est mise en place, puis un béton d'époxy est coulé dans les joints, entre les faces inclinées 11, 12 et les voussoirs en regard 16. 17. Des coffrages appropriés (non représentés) sont mis en place à l'intérieur pour contenir le béton jusqu'à la prise. On coule un tel béton 41 jusqu'à une hauteur voisine du bord de la margelle 22. Cette hauteur sera déterminée en fonction des caractéristiques du terrain en vue d'avoir une assise ferme et stable de la clef de voûte. Pour solidariser les canalisations 31, 32 de la clef de voûte, on coule dans le fond du puits 23 une couche 42 de résine époxy pure. Des joints perdus 43, placés autour des canalisations 31, 32 empêchent la fuite de la résine. On noye ensuite l'ensemble avec un ciment ordinaire 44, après quoi le puits peut être comblé par tout matériau approprié ayant des caractéristiques d'imprégnation d'eau voisines de celles de la roche naturelle environnante. On peut selon les cas utiliser du sable ou des bétons de caractéristiques choisies pour compléter au mieux l'homogénéité des propriétés mécaniques et pétrophysiques du milieu environnant. Après quoi, l'on peut procéder à la mise en froid de la cavité, selon les méthodes connues.

Il va de soi que le mode de réalisation décrit n'est qu'un exemple et qu'il serait possible de la modifier notamment par substitution d'équivalents techniques, sans sortir pour cela du cadre de l'invention comme revendiquée.

**Revendications**

1. Dispositif d'obturation pour ouverture de puits débouchant dans le plafond d'une cavité souterraine creusée dans un massif non résistant pour lequel un soutènement est nécessaire, ladite cavité étant prévue pour un stockage à basse température, inférieure à la température de gel du terrain, caractérisé en ce qu'il comporte en association avec des parois de soutènement de la cavité une pièce (4) en forme de clef de voûte, avec au moins deux faces (11, 12) généralement planes, inclinées sur la varticale; les prolongements de ces faces se rencontrant vers la bas, afin de permettre un appui sur des parois (16, 17), cette pièce comportant au moins un orifice de passage (25, 26) de canalisation au voisinage de son sommet.

2. Dispositif selon la revendication 1, caractérisé en ce que l'ensemble des orifices de passage (25, 26) de canalisation sont entourés par une jupe cylindrique (22) s'élevant vers le haut, de diamètre extérieur inférieur au diamètre interne du puits.

3. Dispositf selon une des revendications 1 ou 2, caractérisé en ce que la zone centrale supérieure de la clef de voûte forme un fond plat (21).

4. Dispositif selon une des revendications 1 à 3, caractérisé en ce qu'il comporte un renfoncement central (28) à la face inférieure, pour faciliter les connexions de canalisations.

5. Procédé de réalisation d'une obturaïtion pour ouverture de puits débouchant dans le plafond d'une cavité souterraine creusée dans un massif non résistant pour lequel un souterraine est necessaire, ladite cavité étant prévue pour un stockage à basse température, au moyen d'un dispositif selon une des revendications 1 à 4, caractérisé en ce que:

— on met en place la clef de voûte (4) en plaçant un ciment entre les bords de la clef de voûte et les faces de support en regard;
— on place des canalisations (31, 32) dans les orifices de passages (25, 26);
— on solidarise les canalisations (31, 32) et la clef de voûte (4) en coulant autour des canalisations sur la face supérieure de la clef de voûte un ciment approprié (42);

— on recouvre l'ensemble par une couche d'un ciment approprié (44); et,

— on remplit le puits avec un matériau ayant des caractéristiques choisies pour compléter au mieux l'homogénéité des propriétés mécaniques et pétrophysiques du milieu environnant.

**Patentansprüche**

1. Verschlußvorrichtung für eine Schachtöffnung, die in die Decke eines unterirdischen Hohlraumes mündet, der in einem nicht festen Massiv, für das eine Stützausbau erforderlich ist, ausgehöhlt ist, wobei der Hohlraum für eine Lagerung bei einer niedrigen Temperatur vorgesehen ist, die geringer ist als die Gefriertemperatur der Umgebung, dadurch gekennzeichnet, daß sie zur Verbindung mit den Wandungen des Stützausbaues des Hohlraumes ein Teil (4) in Form eines Keilverschlusses mit mindestens zwei im wesentlichen ebenen, zur Vertikalen geneigten Außenseiten (11, 12) aufweist, wobei sich die Verlängerungen der Außenseiten nach unten schneiden, um einen Halt auf den Wandungen (16, 17) zu gestatten, und wobei das Teil mindestens eine Leitungs - Durchgangsöffnung (25, 26) in der Nähe seines Scheitels aufweist.

2. Vorrichtung nach Anspruch 1, dadurch gekennzeichnet, daß die Leitungs - Durchgangsöffnungen (25, 26) insgesamt von einer sich nach oben erstreckenden zylindrischen Umwandung (22) umgeben sind, deren Außendurchmesser geringer als der Innendurchmesser des Schachtes ist.

3. Vorrichtung nach Anspruch 1 oder 2, dadurch gekennzeichnet, daß der zentrische, obere Bereiche des Keilverschlusses eine Bodenfläche (21) bildet.

4. Vorrichtung nach einem der Ansprüche 1 bis 3, dadurch gekennzeichnet, daß sie auf ihrer unteren Außenseite eine zentrische Vertiefung (28) zur Erleichterung des Leitungsanschlusses aufweist.

5. Verfahren zur Ausgestaltung eines Verschlusses für eine Schachtöffnung, die in die Decke eines unterirdischen Hohlraumes mündet, der in einem nicht festen Massiv, für das ein Stützausbau erforderlich ist, ausgehöhlt ist, wobei der Hohlraum für eine Lagerung bei einer niedrigen Temperatur vorgesehen ist, unter Verwendung einer Vorrichtung nach einem der Ansprüche 1 bis 4, dadurch gekennzeichnet,

— daß der Keilverschluß (4) durch Einsetzen von Zement zwischen die Kanten des Keilverschlusses und die gegenüberliegenden Lagerflächen montiert wird,

— daß die Leitungen (31, 32) in den Durchgangsöffnungen (25, 26) plaziert werden,

— daß die Leitungen (31, 32) und der Keilverschluß (4) durch Vergießen eines geeigneten Zementes (42) rings um die Leitungen auf der oberen Außenfläche des Keilverschlusses ausgesteift werden,

— daß der Aufbau durch eine Schicht eines geeigneten Zementes (44) angedeckt wird und

— daß der Schacht mit einem Material ausgefüllt wird, das ausgewählte Eigenschaften aufweist, um so gut wie möglich die Homogenität der mechanischen und petrophysischen Eigenschaften des umgebenden Mediums zu erreichen.

**Claims**

1. Closure device for a well aperture opening in to the ceiling of an underground cavity excavated in non-resistant ground for which a support is needed, the said cavity being provided for storage at a low temperature, lower than the freezing point of the ground, characterised in that it comprises in association with the supporting walls of the cavity, a member (4) in the form of a key stone, having at least two generally plane surfaces (11, 12) inclined to the vertical; the extension of these surfaces meeting in downward direction, in order to allow a support on walls (16, 17), this member comprising at least one orifice (25, 26) for the passage of piping close to its apex.

2. Device according to claim 1, characterised in that the assembly of the orifices (25, 26) for the passage of piping is surrounded by an upwardly extending cylindrical skirt (22) having an outer diameter smaller that the inner diameter of the well.

3. Device according to either of claims 1 or 2, characterised in that the upper central area of the keystone forms a flat base (21).

4. Device according to one of claims 1 to 3, characterised um that it comprises a central recess (28) in the lower surface in order to facilitate the connection of piping.

5. Method of establishing a closure for a well aperture opening in the ceiling of an underground cavity excavated in non-resistant ground for which a support is needed, the said cavity being provided for a low-temperature storage, by means of a device according to one of claims 1 to 4, characterised in that:

— the key stone (4) is placed in position by laying a cement between the sides of the key stone and the opposite surfaces of the support;

— pipes (31, 32) are positioned in the passage openings (25, 26);

— the pipe (31, 32) and the key stone (4) are made solid by flowing an appropriate cement (42) around the pipes on the upper surface of the key stone;

— the whole is covered by a layer of appropriate cement (44) and

— the well is filled with a material having characteristics selected for optimum completion of the homogeneity of the mechanical and petrophysical properties of the surrounding environment.

*Fig.1*

35
36
1
44
23
22
41
21
11
42
43
4
14
19
6
28  31  25  26  32
12
19
16
17

2

8

*Fig.2*

11
21
25
26
12
9
22